# EUROPEAN PATENT APPLICATION

(11) **EP 3 576 027 A1**
(43) Date of publication of application: **04.12.2019**
(21) Application number: 17894632.3
(22) Date of filing: 30.01.2017
(51) Int. Cl.: G06Q 10/00, G06Q 50/08

(54) **FACILITY MAINTENANCE SYSTEM AND FACILITY INFORMATION PROVIDING METHOD**

(71) Applicant: Mitsubishi Electric Corporation, Chiyoda-ku Tokyo 100-8310 (JP)
(72) Inventor: NARUSE, Mami, Tokyo 100-8310 (JP); NAKAGAWA, Masayo, Tokyo 100-8310 (JP); IRIE, Megumi, Tokyo 100-8310 (JP); KAMEI, Katsuyuki, Tokyo 100-8310 (JP)
(74) Representative: Witte, Weller & Partner Patentanwälte mbB
(86) International application number: PCT/JP2017/003187
(87) International publication number: WO 2018/138912

(57) **Abstract**

There are included an input event processing unit (21), a data acquisition unit (22), and a display processing unit (29). The input event processing unit (21) receives an input event from a user. The data acquisition unit (22) acquires data relating to the input event received by the input event processing unit (21), from a facility maintenance management database (23) that stores data including measurement information that is obtained from measurement of facilities to be maintained and maintenance information on the facilities. The display processing unit (29) displays a distribution of acquisition times of data on a facility selected by the user and a distribution on the facility, based on the data acquired by the data acquisition unit (22), and displays detailed information on data selected by the user.

## Description

### Field

The present invention relates to a facility maintenance management system and a facility information providing method for supporting maintenance and management of a facility.

### Background

Traveling measurement apparatuses such as a Mobile Mapping System (MMS) have been used for efficiency improvement and sophistication of inspection and maintenance management of social infrastructure such as tunnels, roads, bridges, and other facilities. Data to be acquired by the MMS and the like include three-dimensional position information and image information. There is a system developed for analyzing and managing such information to support maintenance and management of a facility (Patent Literature 1). Such a system is required to display multiple years' worth of maintenance management data on a target facility and to efficiently perform the work of maintenance management of the facility. Specific examples of the maintenance management data include 3D point cloud data acquired and analyzed by the MMS and the like, spatial measurement information such as an abnormality development diagram, and maintenance information such as inspection records, repair records, and abnormality records.

### Citation List

### Patent Literature

Patent Literature 1: Japanese Patent Application Laid-open No. 2016-142662

### Summary

### Technical Problem

However, according to the above-described conventional technique, while the maintenance management data are often accessed based on, for example, selection of an inspection date and time or space, there are few data available as a clue about selection. Therefore, there is a problem in that accessibility to desired maintenance management data is not good.

The present invention has been made in view of the above. An object of the present invention is to achieve a facility maintenance management system capable of improving accessibility to desired maintenance management data.

### Solution to Problem

In order to solve the above problem and achieve the above object, a facility maintenance management system according to the present invention includes an input event processing unit that receives an input event from a user. Furthermore, the facility maintenance management system includes a data acquisition unit that acquires data relating to the input event received by the input event processing unit, from a facility maintenance management database that stores data including measurement information obtained from measurement of facilities to be maintained and maintenance information on the facilities. In addition, the facility maintenance management system includes a display processing unit that displays a distribution of acquisition times of data on a facility selected by the user and a distribution on the facility, based on the data acquired by the data acquisition unit, and displays detailed information on data selected by the user.

### Advantageous Effects of Invention

According to the present invention, it is possible to achieve an effect of improving accessibility to desired maintenance management data.

### Brief Description of Drawings

FIG. 1 is a block diagram illustrating a configuration example of a facility maintenance management system according to a first embodiment
FIG. 2 is a flowchart illustrating a process in which the facility maintenance management system according to the first embodiment displays the distribution of acquisition times of data relating to a selected facility.
FIG. 3 is a diagram illustrating an example in which the facility maintenance management system according to the first embodiment displays a facility list on an output device, and also displays the distribution of the acquisition times of the data on the selected facility, based on a time axis.
FIG. 4 is a flowchart illustrating a process in which the facility maintenance management system according to the first embodiment displays the distribution of data, on the facility on a spatial axis.
FIG. 5 is a diagram illustrating an example in which the facility maintenance management system according to the first embodiment displays the distribution of data, on the facility in a spatial axis area.
FIG. 6 is a flowchart illustrating a process in which the facility maintenance management system according to the first embodiment displays the distribution of data, on the facility with regard to a selected section of the facility.
FIG. 7 is a diagram illustrating an example in which the facility maintenance management system according to the first embodiment displays the distribution of data on a selected section of the facility in an image display area.
FIG. 8 is a flowchart illustrating a process in which the facility maintenance management system according to the first embodiment displays detailed information on a selected part of the facility.
FIG. 9 is a diagram illustrating an example in which the facility maintenance management system according to the first embodiment displays detailed information on selected data.
FIG. 10 is a diagram illustrating an example of a display screen displaying, in a detailed information area, a photograph list concerning the facility in the facility maintenance management system according to the first embodiment.
FIG. 11 is a diagram illustrating an example of how the facility maintenance management system according to the first embodiment displays detailed information on a photograph selected from the photograph list in the detailed information area.
FIG. 12 is a flowchart illustrating a process in which detailed information on data selected by a user is displayed in the facility maintenance management system.
FIG. 13 is a diagram illustrating an example of the case where processing circuitry of the facility maintenance management system according to the first embodiment includes a CPU and a memory.
FIG. 14 is a diagram illustrating an example of the case where the processing circuitry of the facility maintenance management system according to the first embodiment includes dedicated hardware.
FIG. 15 is a flowchart illustrating a process in which a facility maintenance management system according to a second embodiment displays the aging change of a facility.
FIG. 16 is a diagram illustrating an example in which the facility maintenance management system according to the second embodiment three-dimensionally displays the aging change of the facility.
FIG. 17 is a diagram illustrating an example in which the facility maintenance management system according to the second embodiment two-dimensionally displays the aging change of the facility.
FIG. 18 is a diagram illustrating an example in which the facility maintenance management system according to the second embodiment displays changes in soundness for each section of the facility.
FIG. 19 is a diagram illustrating another example in which the facility maintenance management system according to the second embodiment displays changes in soundness for each section of the facility.
FIG. 20 is a diagram illustrating an example in which the facility maintenance management system according to the second embodiment displays the aging change of a specific abnormality.
FIG. 21 is a block diagram illustrating a configuration example of a facility maintenance management system according to a third embodiment.
FIG. 22 is a flowchart illustrating a process in which the facility maintenance management system according to the third embodiment stores information on input events.
FIG. 23 is a flowchart illustrating a process in which the facility maintenance management system according to the third embodiment provides display on an output device 3 based on a preset number received from a user.
FIG. 24 is a flowchart illustrating a process in which a facility maintenance management system according to a fourth embodiment displays a horizontally or vertically reversed image of a specified range in an image display area.
FIG. 25 is a diagram illustrating an example in which the facility maintenance management system according to the fourth embodiment displays a horizontally or vertically reversed image of a specified range in the image display area.
FIG. 26 is a diagram illustrating an example in which the facility maintenance management system according to the fourth embodiment displays explanatory characters for characters specified in the image display area.
FIG. 27 is a diagram illustrating an example of changes in display provided when the facility maintenance management system according to the fourth embodiment switches the display style of a facility.
FIG. 28 is a block diagram illustrating a configuration example of a facility maintenance management system according to a fifth embodiment.
FIG. 29 is a diagram illustrating an example of a positional relationship between the facility maintenance management system according to the fifth embodiment and an actual facility.

### Description of Embodiments

Facility maintenance management systems and facility information providing methods according to embodiments of the present invention will be described below in detail with reference to the drawings. It should be noted that the present invention is not limited to the embodiments.

### First Embodiment.

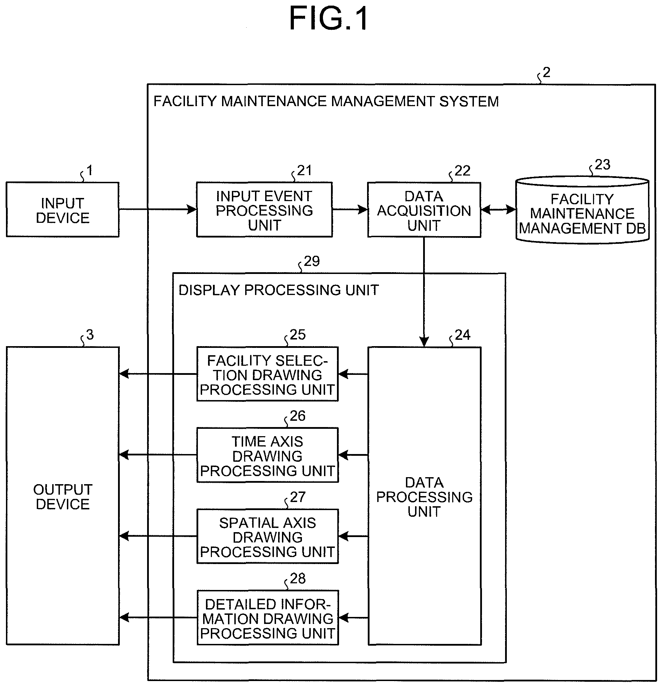

FIG. 1 is a block diagram illustrating a configuration example of a facility maintenance management system 2 according to a first embodiment of the present invention. The facility maintenance management system 2 is connected to an input device 1 and an output device 3. The facility maintenance management system 2 is, for example, a personal computer. The input device 1 is an input tool such as a mouse or a keyboard. The output device 3 is a display unit such as a monitor. In FIG. 1, the facility maintenance management system 2, the input device 1, and the output device 3 are separately configured. However, the facility maintenance management system 2 may be configured integrally with the input device 1 and the output device 3. Furthermore, it is also possible to adopt a configuration in which the facility maintenance management system 2 is a server, and the input device 1 and the output device 3 are client terminals.

A configuration of the facility maintenance management system 2 will be described below. The facility maintenance management system 2 includes an input event processing unit 21, a data acquisition unit 22, a facility maintenance management database (hereinafter referred to as DB) 23, a data processing unit 24, a facility selection drawing processing unit 25, a time axis drawing processing unit 26, a spatial axis drawing processing unit 27, and a detailed information drawing processing unit 28. A display processing unit 29 includes the data processing unit 24, the facility selection drawing processing unit 25, the time axis drawing processing unit 26, the spatial axis drawing processing unit 27, and the detailed information drawing processing unit 28.

The input event processing unit 21 receives an input event from a user via the input device 1, and notifies the data acquisition unit 22 of information on the received input event. Examples of input events include: a selection of a facility to be displayed; a selection of one or more acquisition times, data of which are to be displayed, from the distribution of times when data were acquired; and a selection of one or more positions of data for which detailed information is to be displayed from the distribution of the data, on a facility. What the input event processing unit 21 receives from a user is regarded as an input event. It should be noted that an input event to be received from a user may be input by means other than a mouse or a keyboard. For example, in the case where a user takes a photograph of a facility itself at a site where the facility is located by using a camera or a scanner connected to a personal computer, the input event processing unit 21 may receive the result of image recognition as an input event of a selection of the facility. Alternatively, in the case where a user reads, with a scanner or a bar code reader, character information or bar code information or the like specified on a sticker or the like put on a facility, including records of a name, and the type and time of inspection or repair, the input event processing unit 21 may receive the read information as an input event of a selection of the facility. In other words, input events may be received semi-automatically.

Based on the information on the input event acquired from the input event processing unit 21, the data acquisition unit 22 acquires data relating to the input event from the facility maintenance management DB 23 so as to provide display corresponding to the input event. The data acquisition unit 22 outputs the acquired data to the data processing unit 24.

The facility maintenance management DB 23 is a database storing data on infrastructures, that is, facilities to be maintained. The data stored in the facility maintenance management DB 23 include measurement information such as three-dimensional point cloud data on each facility three-dimensionally measured by an MMS or the like, or a photograph of each facility two-dimensionally measured. Both the three-dimensional point cloud data and the photograph may be stored as the measurement information. Alternatively, Computer Aided Design (CAD) data may be used as the measurement information. In addition, the data stored in the facility maintenance management DB 23 also include maintenance information such as an inspection record concerning an inspection of each facility, a repair record concerning a repair of each facility, and an abnormality record obtained from the three-dimensional point cloud data or the photograph. Each piece of the data includes a facility name indicating a facility for which the data are intended, classification information indicating classification of the type of the facility such as a tunnel, a road, or the like, information on the installation location of the facility, information about a position on the facility in the case where the data are intended for a part of the facility, attribute information indicating an attribute of the data such as a photograph or an inspection record, and information such as an acquisition time of the data. Furthermore, the abnormality record may include information on the soundness of an abnormality. It should be noted that although FIG. 1 illustrates the facility maintenance management DB 23 configured as a single database, this is merely an example, and a database may be separately provided for each measurement information and each maintenance information. Furthermore, the facility maintenance management DB 23 may be provided outside the facility maintenance management system 2.

The data processing unit 24 outputs the data that the data acquisition unit 22 has acquired from the facility maintenance management DB 23, to one of the drawing processing units for causing the data to be displayed on the output device 3. It should be noted that the drawing processing unit to which the data processing unit 24 outputs the data acquired from the data acquisition unit 22 is assumed to be set by a user in advance for each type of the data.

The facility selection drawing processing unit 25 displays information for selecting a facility for which detailed information on data are to be displayed on the output device 3.

The time axis drawing processing unit 26 displays, on the output device 3, the distribution of acquisition times of data on the facility selected by the user, among the data stored in the facility maintenance management DB 23.

The spatial axis drawing processing unit 27 displays, on the output device 3, a distribution on the facility selected by the user with regard to data of a specific acquisition time concerning the facility. Furthermore, in the case where the facility is divided into a plurality of sections, the spatial axis drawing processing unit 27 displays, on the output device 3, the distribution of data in a section of the facility selected by the user, in addition to displaying the facility by using three-dimensional point cloud data or the like.

The detailed information drawing processing unit 28 displays, on the output device 3, detailed information about data on a specific part of the facility, such as abnormality, selected by the user.

Next, described below is a process in which the facility maintenance management system 2 receives an input from a user, and displays, on the output device 3, detailed information about data on a specific part, such as an abnormal part, of a facility desired by the user.

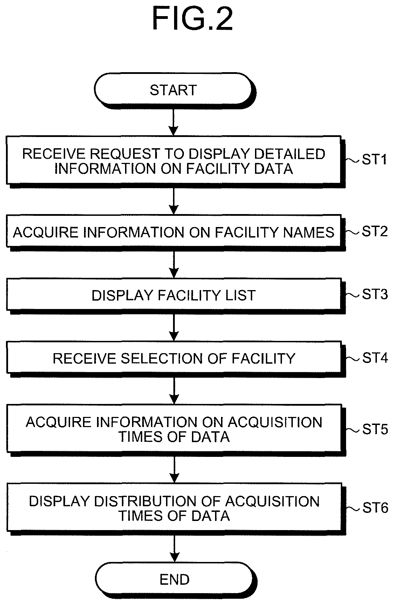

FIG. 2 is a flowchart illustrating a process in which the facility maintenance management system 2 according to the first embodiment displays the distribution of acquisition times of data relating to a selected facility. After the power is turned on, or when receiving a request to display detailed information on facility data from a user, the facility maintenance management system 2 displays, on the output device 3, information for selecting a facility to be displayed. Specifically, in the facility maintenance management system 2, the input event processing unit 21 receives a request to display detailed information on facility data from a user via the input device 1 (step ST1). The input event processing unit 21 notifies the data acquisition unit 22 that the input event processing unit 21 has received the request to display detailed information on facility data.

The data acquisition unit 22 acquires, from the facility maintenance management DB 23, information on facility names regarding facilities for which data are stored in the facility maintenance management DB 23 (step ST2). The data acquisition unit 22 outputs the acquired information on facility names to the data processing unit 24.

The data processing unit 24 outputs the acquired information on facility names to the facility selection drawing processing unit 25. On the basis of the acquired information on facility names, the facility selection drawing processing unit 25 displays a facility list from which a facility can be selected, on the output device 3 (step ST3).

The user refers to the facility list, and selects, with the input device 1, a desired facility for which facility data are to be displayed. The input event processing unit 21 receives the selection of the facility by the user via the input device 1 (step ST4). Here, it is assumed that a tunnel with a facility name "D tunnel" has been selected. The input event processing unit 21 notifies the data acquisition unit 22 that the tunnel named "D tunnel" has been selected.

Upon receiving the notification from the input event processing unit 21, the data acquisition unit 22 acquires information on the acquisition time of each piece of data relating to the facility name of "D tunnel" out of the data stored in the facility maintenance management DB 23 (step ST5). The data relating to "D tunnel" just need to be data intended for the facility "D tunnel". An attribute of data such as a photograph or an inspection record does not matter. The data acquisition unit 22 outputs the acquired information on the acquisition times of the data on "D tunnel" to the data processing unit 24.

The data processing unit 24 outputs the acquired information on the acquisition times of the data on "D tunnel" to the time axis drawing processing unit 26. On the basis of the acquired information on the acquisition times of the data on "D tunnel", the time axis drawing processing unit 26 displays, on the output device 3, the distribution of the acquisition times of the data based on a time axis, for each piece of the data relating to "D tunnel" (step ST6) .

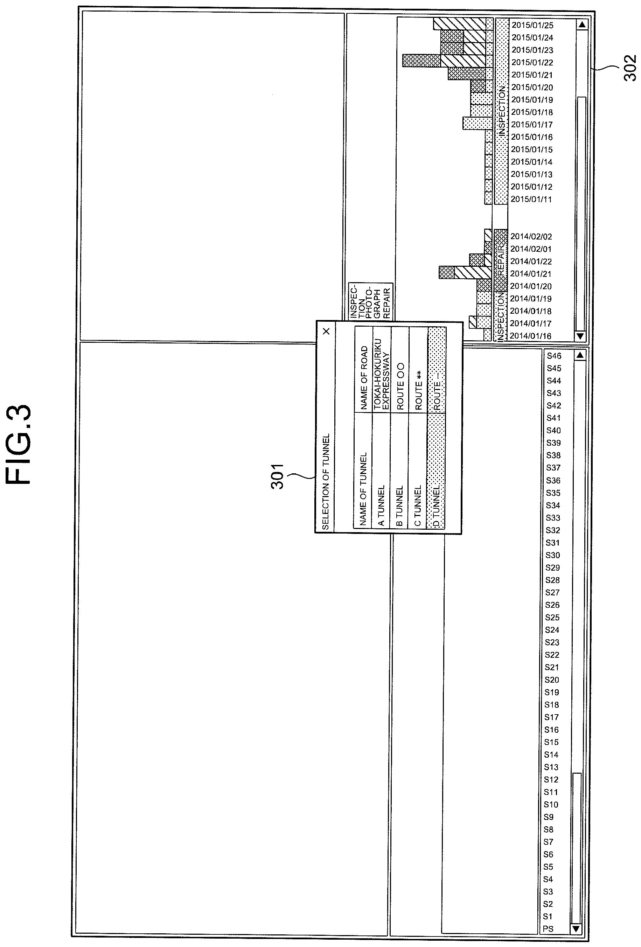

FIG. 3 is a diagram illustrating an example in which the facility maintenance management system 2 according to the first embodiment displays the facility list on the output device 3, and also displays the distribution of the acquisition times of the data on the selected facility, based on the time axis. The display illustrated in FIG. 3 is an example of a display screen of the output device 3 in the case where the facility maintenance management system 2 performs displaying. Display to be provided on the display screen of the output device 3 will be cited as an example of display to be provided by the facility maintenance management system 2 also in the following description. As described above, the facility maintenance management system 2 first displays a facility list 301 on the output device 3, and then displays the distribution of acquisition times of data on a selected facility in a time axis area 302. In FIG. 3, the time axis drawing processing unit 26 counts, for example, each of an inspection record, a photograph, and a repair record as a single piece of data regardless of the attribute of the data, and displays the distribution of the acquisition times of the data based on the time axis in the time axis area 302. Therefore, the user can check the distribution of the acquisition times of the data on the selected facility to be displayed. With the time axis area 302 as a clue, the user can estimate that some change has occurred in the selected facility in a period in which the total sum of the number of pieces of data of each type such as inspection records, photographs, or repair records is large. It should be noted that instead of displaying the facility list 301 in tabular form as illustrated in FIG. 3, the display screen may also be configured to cause a relevant facility to be indicated on a map such that the facility can be selected from the map.

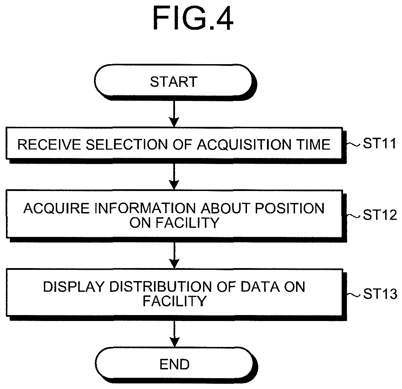

Next, described below is a process of displaying the distribution of data of an acquisition time selected by the user in FIG. 3 on the facility. FIG. 4 is a flowchart illustrating a process in which the facility maintenance management system 2 according to the first embodiment displays the distribution of data, on the facility on a spatial axis. In the facility maintenance management system 2, the input event processing unit 21 receives a selection of an acquisition time in the time axis area 302 from the user via the input device 1 (step ST11). In selecting an acquisition time, the user may select a single acquisition time, or may select a plurality of acquisition times in the time axis area 302 of FIG. 3. That is, the user can select one or more acquisition times in the time axis area 302. The input event processing unit 21 notifies the data acquisition unit 22 of information on the received acquisition time in the time axis area 302.

The data acquisition unit 22 acquires information about positions on the facility with regard to data of the selected acquisition time, from the facility maintenance management DB 23 (step ST12). Upon acquiring the information on the positions on the facility with regard to the data of the selected acquisition time, the data acquisition unit 22 outputs the information to the data processing unit 24.

Upon acquiring the information on the positions on the facility with regard to the data of the selected acquisition time, the data processing unit 24 outputs the information to the spatial axis drawing processing unit 27. The spatial axis drawing processing unit 27 displays, on the output device 3, the distribution of the data of the selected acquisition time on the facility based on the information on the positions on the facility (step ST13).

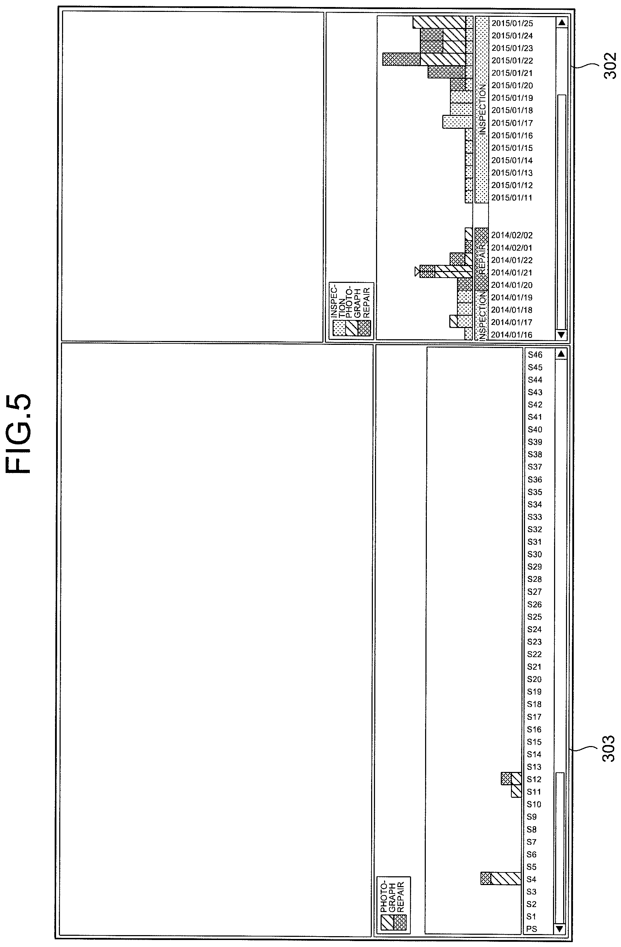

FIG. 5 is a diagram illustrating an example in which the facility maintenance management system 2 according to the first embodiment displays the distribution of data, on the facility in a spatial axis area 303. In this example, the facility maintenance management system 2 shows the distribution of data of one of acquisition times illustrated in the time axis area 302 on the facility based on the spatial axis in the spatial axis area 303. The facility "D tunnel" is divided into a plurality of spans, that is, sections (S1, S2, ..., and SN in FIG. 5: N is a natural number) to show a section to which each piece of the data corresponds, on the spatial axis illustrated in FIG. 5. It should be noted that the symbol "PS" stands for a starting point, that is, an entrance of the tunnel, in the spatial axis area 303 of FIG. 5. With this display, with regard to the facility for which data are to be displayed, the user can check the distribution on the facility. With the display in the spatial axis area 303 as a clue, the user can estimate that some change has occurred in a section in which the total sum of the number of pieces of data of each type such as inspection records, photographs, or repair records is large.

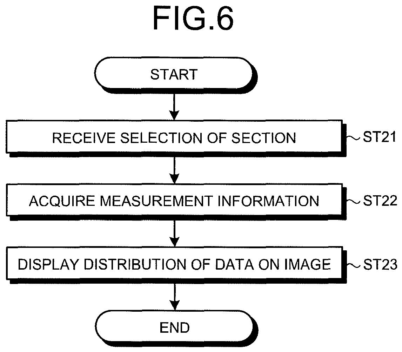

Next, described below is a process of displaying the distribution of data in a section of the facility selected by the user in FIG. 5. FIG. 6 is a flowchart illustrating a process in which the facility maintenance management system 2 according to the first embodiment displays the distribution of data, on the facility with regard to the selected section of the facility. In the facility maintenance management system 2, the input event processing unit 21 receives, from the user, a selection of a section in the spatial axis area 303 via the input device 1 (step ST21). In selecting a section, the user may select a single section, or may select a plurality of sections in the spatial axis area 303 of FIG. 5. That is, the user can select one or more sections in the spatial axis area 303. The input event processing unit 21 notifies the data acquisition unit 22 of information on the received section in the spatial axis area 303.

The data acquisition unit 22 acquires, from the facility maintenance management DB 23, measurement information such as three-dimensional point cloud data or a photograph of the facility for the selected section (step ST22). The data acquisition unit 22 outputs the acquired measurement information for the section to the data processing unit 24.

Upon acquiring the measurement information for the selected section, the data processing unit 24 outputs the measurement information to the spatial axis drawing processing unit 27. The spatial axis drawing processing unit 27 displays the distribution of data on an image, on the output device 3 on the basis of the measurement information for the selected section (step ST23).

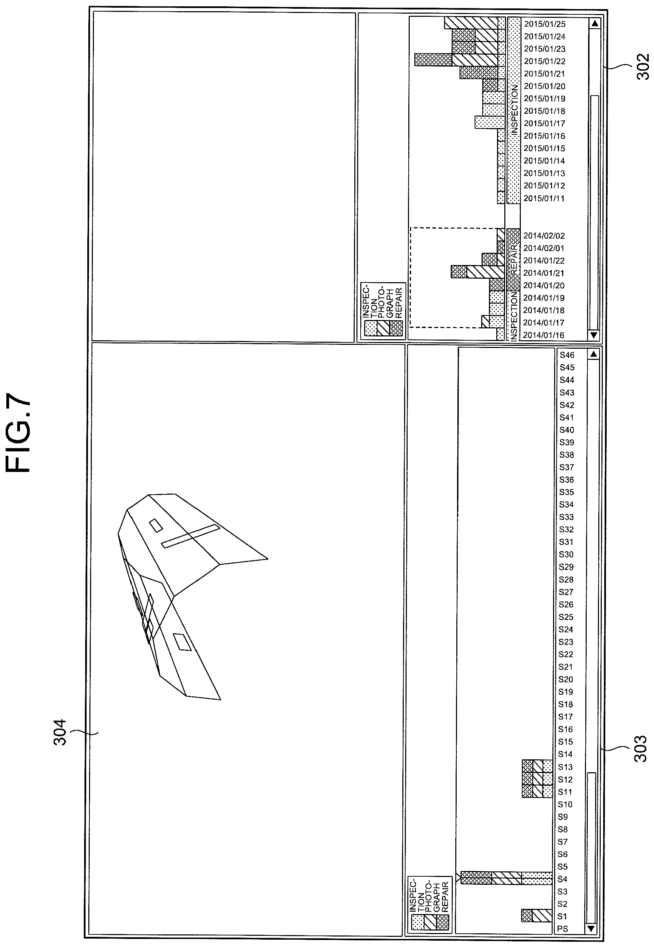

FIG. 7 is a diagram illustrating an example in which the facility maintenance management system 2 according to the first embodiment displays the distribution of data on a selected section of the facility in an image display area 304. Here, a part of "D tunnel" corresponding to a section S4 is three-dimensionally displayed in the image display area 304 in a case where the "D tunnel" is divided into a plurality of sections. With this display, the user can check a position on the facility at which an abnormality is found, and a position at which a repair or an inspection has been performed. With the display in the image display area 304 as a clue, the user can access desired data for which the user desires to check detailed information.

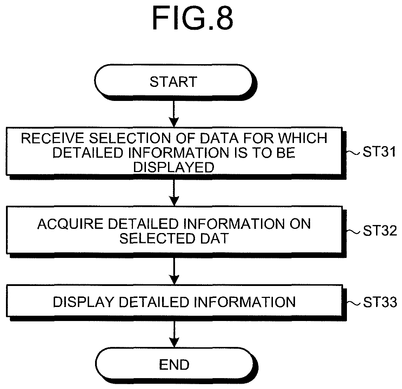

Next, described below is a process of displaying detailed information about data on abnormality or the like displayed in FIG. 7. FIG. 8 is a flowchart illustrating a process in which the facility maintenance management system 2 according to the first embodiment displays detailed information on a selected part of the facility. In the facility maintenance management system 2, the input event processing unit 21 receives, from the user, a selection of a part of the facility, that is, data for which detailed information is to be displayed, via the input device 1 (step ST31). The part, that is, data for which detailed information is to be displayed refer to data on abnormality or the like displayed in the image display area 304. With the input device 1, the user individually selects data on a specific abnormality, or sets any range to collectively select data on abnormality included in the range. It should be noted that simple information on abnormality may be displayed in the image display area 304 in FIG. 7. Alternatively, differences in types of abnormality may be visualized by color coding or the like. The input event processing unit 21 notifies the data acquisition unit 22 of information on the received data for which detailed information is to be displayed.

The data acquisition unit 22 acquires detailed information on the selected data, from the facility maintenance management DB 23 (step ST32). Upon acquiring the detailed information on the selected data, the data acquisition unit 22 outputs the detailed information to the data processing unit 24.

Upon acquiring the detailed information on the selected data, the data processing unit 24 outputs the detailed information to the detailed information drawing processing unit 28. Upon acquiring the detailed information on the selected data, the detailed information drawing processing unit 28 displays, on the output device 3, the detailed information on the selected data based on the acquired data (step ST33).

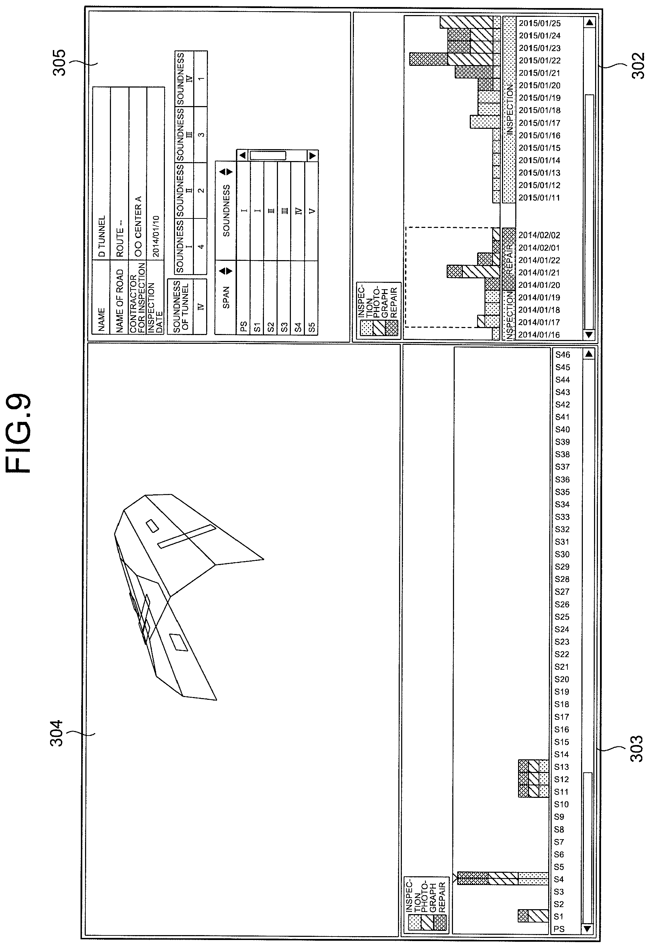

FIG. 9 is a diagram illustrating an example in which the facility maintenance management system 2 according to the first embodiment displays the detailed information on the selected data. A detailed information area 305 is displayed in addition to the display illustrated in FIG. 7. Here, character information has been displayed as the detailed information on the selected data. With this display, the user can check detailed information on a selected abnormality or the like, such as the date of inspection and soundness (for example, the detailed information is shown for the latest information among information of a plurality of periods in the case where the plurality of periods are specified). Regarding soundness, it can be set as "1: soundness is high", ..., and "4: soundness is low". It should be noted that the levels of soundness are indicated by Roman numerals in FIG. 9. The same applies to the following drawings. In this way, when a user selects a facility to be checked in the facility maintenance management system 2, the user can estimate the time when an abnormality or the like has occurred, on the basis of the time axis area 302. Furthermore, the facility maintenance management system 2 enables the user to select a specific acquisition time of data by use of the time axis area 302 as a clue, and also select a specific section of the facility by use of the spatial axis area 303 as a clue, so that the user can check data on the selected part of the facility, for example, detailed information on abnormality. It should be noted that the user can select a plurality of acquisition times from the time axis area 302 as described above. In such a case, the facility maintenance management system 2 may display added or superimposed data of all the selected acquisition times in the spatial axis area 303 and the image display area 304. Alternatively, the facility maintenance management system 2 may display, as a representative, data of a specific time such as the latest data out of data of the plurality of acquisition times, or may display data of each acquisition time such that it is possible to switch between the data of each acquisition time. For example, the facility maintenance management system 2 may display accumulated data of all the selected acquisition times in the spatial axis area 303. In addition, the facility maintenance management system 2 may display, in the image display area 304, superimposed images generated from the data of the acquisition times so that an aging change can be seen.

It should be noted that although the time axis drawing processing unit 26 and the spatial axis drawing processing unit 27 display types of data layered in the form of a column chart in the time axis area 302 and the spatial axis area 303 in the facility maintenance management system 2 as illustrated in FIG. 9 and others, the method for displaying each piece of data is not limited thereto. The facility maintenance management system 2 may separately display the types of data in the time axis area 302. Specifically, the facility maintenance management system 2 may display the types of data as column charts arranged side by side separately for the inspection record, the repair record, and the photograph of an abnormality, without arranging the types of data in layers. Furthermore, the facility maintenance management system 2 may use a pie chart or the like in addition to a column chart, as a means for showing the number of pieces of data. Moreover, in the case where the number of pieces of data is large, the facility maintenance management system 2 may display a data amount by indicating a difference from the previous data amount in the time axis area 302 and the spatial axis area 303, instead of using a column chart, a pie chart, or the like. In addition, instead of a column chart or a pie chart, an abnormality development diagram may be displayed in the spatial axis area 303. Furthermore, an abnormality development diagram may be arranged and displayed side by side with a column chart or a pie chart.

Moreover, in the facility maintenance management system 2, the manner of displaying the state of a facility in the image display area 304 is not limited to three-dimensional display using three-dimensional point cloud data. It is also possible to adopt two-dimensional display. In addition, the facility maintenance management system 2 may display, in the image display area 304, a part corresponding to a section selected in the abnormality development diagram.

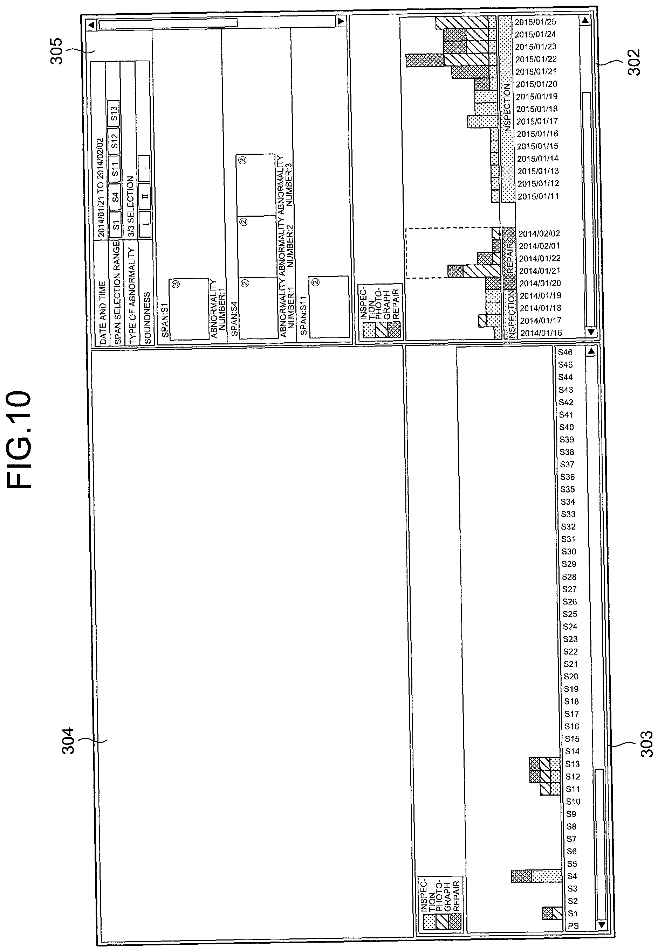

Moreover, the facility maintenance management system 2 may be configured to display image information such as a photograph list in the detailed information area 305, without displaying the image display area 304. FIG. 10 is a diagram illustrating an example of a display screen displaying, in the detailed information area 305, a photograph list concerning the facility in the facility maintenance management system 2 according to the first embodiment. In FIG. 10, the facility maintenance management system 2 displays, in the detailed information area 305, photographs corresponding to the range of acquisition times selected in the time axis area 302, as thumbnails. A number shown in the upper right of each photograph indicates the number of photographs. When a user selects a photograph displayed as a thumbnail in the detailed information area 305, the facility maintenance management system 2 displays detailed information on the selected photograph.

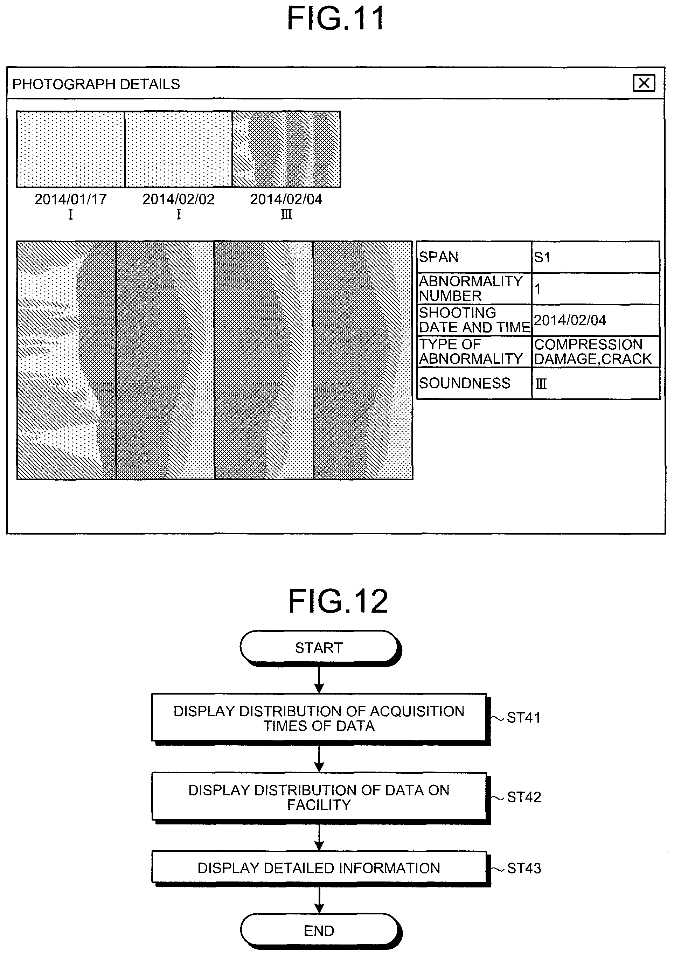

FIG. 11 is a diagram illustrating an example of how the facility maintenance management system 2 according to the first embodiment displays detailed information on a photograph selected from the photograph list in the detailed information area 305. The display illustrated in FIG. 11 may be provided while being superimposed on the display screen illustrated in FIG. 10, or may be provided in the image display area 304, which is a vacant space in FIG. 10. As illustrated in FIG. 11, there are displayed all photographs relating to the selected photograph, and information such as a shooting date and time. In FIG. 11, three photographs at the upper left may be arranged and displayed in order of date, or may be arranged and displayed in order of soundness level, such as in ascending order of soundness level. It should be noted that display of the photograph list in the detailed information area 305 illustrated in, for example, FIG. 10 may also be provided on the display screen illustrated in FIG. 9. For example, tabs such as "detailed information" and "photograph list" may be set in the detailed information area 305 illustrated in FIG. 9 such that the facility maintenance management system 2 can switch display details in the detailed information area 305 as a user selects each tab.

Provided below, based on a flowchart, is a brief description of a process in which detailed information on data selected by a user is displayed in the facility maintenance management system 2. FIG. 12 is a flowchart illustrating a process in which detailed information on data selected by a user is displayed in the facility maintenance management system 2. First, in the facility maintenance management system 2, the input event processing unit 21 receives a selection of a facility to be displayed from the user. The data acquisition unit 22 acquires relevant data from the facility maintenance management DB 23. The display processing unit 29 displays the distribution of acquisition times of data on the selected facility (step ST41). The detailed process of step ST41 is as illustrated in the flowchart of FIG. 2. The process of step ST41 is referred to as a first display processing step.

In the facility maintenance management system 2, the input event processing unit 21 receives, from the user, a selection of one or more acquisition times for which data are to be displayed from the distribution of the acquisition times of the data. The data acquisition unit 22 acquires relevant data from the facility maintenance management DB 23. The display processing unit 29 displays the distribution of data of the selected acquisition time on the facility (step ST42). The detailed process of step ST42 is as illustrated in the flowcharts of FIGS. 4 and 6. The process of step ST42 is referred to as a second display processing step.

In the facility maintenance management system 2, the input event processing unit 21 receives, from the user, a selection of one or more positions of the data for which detailed information is to be displayed from the distribution of the data, on the facility. The data acquisition unit 22 acquires relevant data from the facility maintenance management DB 23. The display processing unit 29 displays detailed information on data of the selected position (step ST43). The detailed process of step ST43 is as illustrated in the flowchart of FIG. 8. The process of step ST43 is referred to as a third display processing step.

Next, a hardware configuration of the facility maintenance management system 2 will be described. The facility maintenance management DB 23 is implemented by a memory in the facility maintenance management system 2. The input event processing unit 21, the data acquisition unit 22, the data processing unit 24, the facility selection drawing processing unit 25, the time axis drawing processing unit 26, the spatial axis drawing processing unit 27, and the detailed information drawing processing unit 28 are implemented by processing circuitry. That is, the facility maintenance management system 2 includes processing circuitry for displaying detailed information on a desired part of the selected facility. The processing circuitry may be a memory and a CPU for executing a program stored in the memory, or may be dedicated hardware.

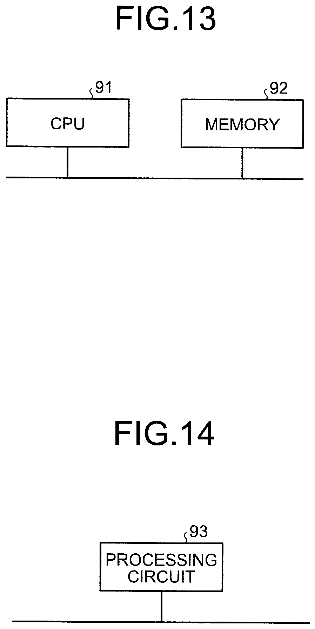

FIG. 13 is a diagram illustrating an example of the case where the processing circuitry of the facility maintenance management system 2 according to the first embodiment is configured by a CPU and a memory. In the case where the processing circuitry includes a CPU 91 and a memory 92, each function of the processing circuitry of the facility maintenance management system 2 is implemented by software, firmware, or a combination of software and firmware. The software or firmware is described as a program, and stored in the memory 92. The CPU 91 reads and executes a program stored in the memory 92 to implement each function of the processing circuitry. That is, in the facility maintenance management system 2, the processing circuitry includes the memory 92 for storing programs that eventually cause detailed information on the desired part of the selected facility to be displayed. In addition, it can also be said that these programs cause a computer to execute the procedure and method of the facility maintenance management system 2. Here, the CPU 91 may be a processing unit, an arithmetic unit, a microprocessor, a microcomputer, a processor, a digital signal processor (DSP), or the like. Furthermore, examples of the memory 92 include a nonvolatile or volatile semiconductor memory such as a random access memory (RAM), a read only memory (ROM), a flash memory, an erasable programmable ROM (EPROM), or an electrically EPROM (EEPROM) (registered trademark), a magnetic disk, a flexible disk, an optical disk, a compact disk, a mini disk, and a digital versatile disc (DVD).

FIG. 14 is a diagram illustrating an example of the case where the processing circuitry of the facility maintenance management system 2 according to the first embodiment is configured by dedicated hardware. In the case where the processing circuitry is dedicated hardware, examples of processing circuitry 93 illustrated in FIG. 14 include a single circuit, a composite circuit, a programmed processor, a parallel-programmed processor, an application specific integrated circuit (ASIC), a field programmable gate array (FPGA), and a combination thereof. Each function of the facility maintenance management system 2 may be separately implemented by the processing circuitry 93. Alternatively, the functions of the facility maintenance management system 2 may be collectively implemented by the processing circuitry 93.

It should be noted that some of the functions of the facility maintenance management system 2 may be implemented by dedicated hardware, and some of the other functions thereof may be implemented by software or firmware. Thus, the processing circuitry can implement each of the above-described functions by dedicated hardware, software, firmware, or a combination thereof.

As described above, according to the present embodiment, the facility maintenance management system 2 displays the distribution of acquisition times of data relating to a facility selected by a user, displays a distribution on the facility with regard to data of an acquisition time selected by the user, and displays detailed information on data that is selected by the user such as abnormality. The user accesses desired data by using, as clues, the distribution of the acquisition times of the data, and the distribution of the data on the facility. As a result, the facility maintenance management system 2 can improve accessibility to desired maintenance management data for the user.

### Second Embodiment.

Described in the first embodiment is a method for displaying detailed information on data concerning a desired part of a facility. In a second embodiment, a method for displaying the aging change of a facility will be described. It should be noted that the configuration of the facility maintenance management system 2 is the same as that in the first embodiment.

In the case where the process performed in the first embodiment is set as a mode for displaying detailed information on desired data, the facility maintenance management system 2 first receives, from a user, a request to display detailed information on facility data. In the second embodiment, the facility maintenance management system 2 receives, from a user, a selection of a mode for displaying an aging change and a selection of a facility for which the aging change is to be displayed.

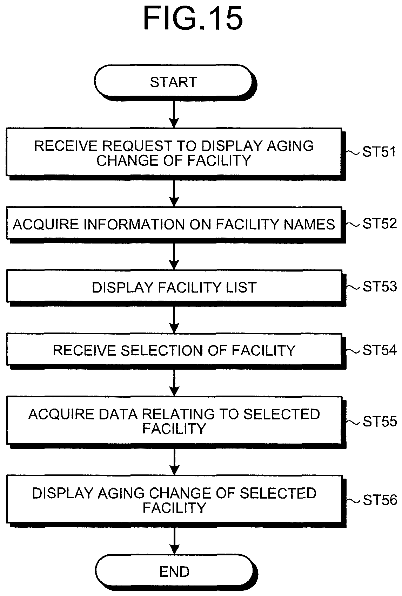

FIG. 15 is a flowchart illustrating a process in which the facility maintenance management system 2 according to the second embodiment displays the aging change of a facility. In the facility maintenance management system 2, the input event processing unit 21 receives, from a user, a request to display the aging change of a facility via the input device 1 (step ST51). The input event processing unit 21 notifies the data acquisition unit 22 that the input event processing unit 21 has received the request to display the aging change of facility data.

The data acquisition unit 22 acquires, from the facility maintenance management DB 23, information on facility names regarding facilities for which data are stored in the facility maintenance management DB 23 (step ST52). The data acquisition unit 22 outputs the acquired information on facility names to the data processing unit 24.

The data processing unit 24 outputs the acquired information on facility names to the facility selection drawing processing unit 25. The facility selection drawing processing unit 25 displays, on the output device 3, a facility list from which a facility can be selected, on the basis of the acquired information on facility names (step ST53) .

The user refers to the facility list, and selects, with the input device 1, a desired facility for which an aging change is to be displayed. The input event processing unit 21 receives a selection of the facility from the user via the input device 1 (step ST54). Here, it is assumed that a tunnel with a facility name "D tunnel" has been selected. The input event processing unit 21 notifies the data acquisition unit 22 that the tunnel named "D tunnel" has been selected.

Upon receiving the notification from the input event processing unit 21, the data acquisition unit 22 acquires, from the facility maintenance management DB 23, data relating to the selected facility, that is, data relating to the facility name of "D tunnel" (step ST55). The data acquisition unit 22 outputs the acquired data on "D tunnel" to the data processing unit 24 in this case.

The data processing unit 24 outputs the acquired data on "D tunnel" to the spatial axis drawing processing unit 27. The spatial axis drawing processing unit 27 displays the aging change of the selected facility (step ST56). Specifically, the spatial axis drawing processing unit 27 displays the "D tunnel" such that a plurality of "D tunnels" in units of a predetermined period such as one year are shown side by side, on the basis of the acquired data on "D tunnel", and displays, on "D tunnel" corresponding to each period, at least some information included in the maintenance information such as abnormality. The process performed by the facility maintenance management system 2 as illustrated in FIG. 15 is referred to as a fourth display processing step.

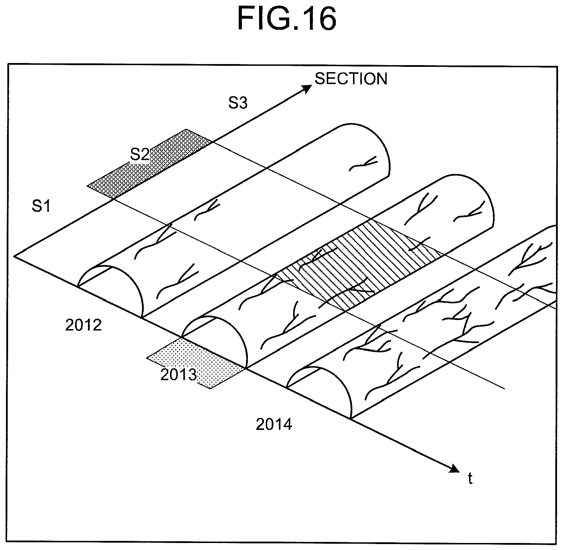

FIG. 16 is a diagram illustrating an example in which the facility maintenance management system 2 according to the second embodiment three-dimensionally displays the aging change of the facility. In FIG. 16, a t-axis is a time axis, and the other axis shows positions in "D tunnel", that is, sections. The same applies to the following drawings. FIG. 16 illustrates an example in which the time axis drawing processing unit 26 displays data on abnormality of "D tunnel" for three years from 2012 to 2014. The time axis drawing processing unit 26 provides the display illustrated in FIG. 16 by using the image display area 304, or by using the spatial axis area 303 and the image display area 304 illustrated in FIG. 9 and others. As a result, the user can check the development of changes in abnormality regarding the displayed facility. It should be noted that when the user selects a specific part from the display illustrated in FIG. 16, that is, when the user selects, for example, a section S2 in the period of 2013 as illustrated in FIG. 16, the facility maintenance management system 2 may display detailed information on data about abnormality in the section S2 in the detailed information area 305 illustrated in, for example, FIG. 9 as in the first embodiment.

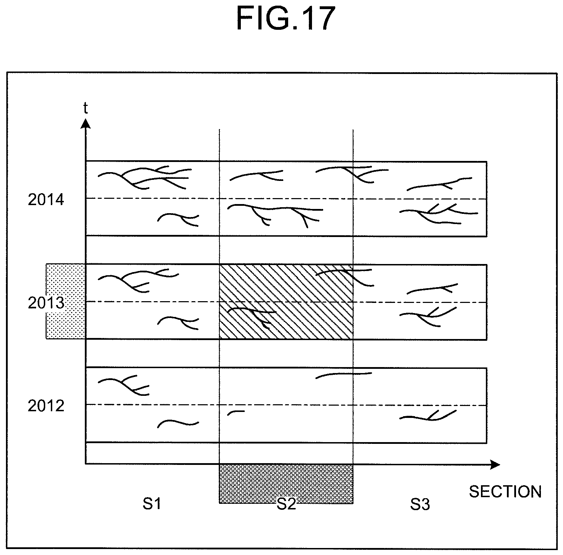

Furthermore, when the aging change of the facility is displayed, the facility may be displayed not in a three-dimensional manner but in a two-dimensional manner that is performed by use of a development diagram. FIG. 17 is a diagram illustrating an example in which the facility maintenance management system 2 according to the second embodiment two-dimensionally displays the aging r change of the facility. Even in this case, it is possible to achieve an effect similar to that in the example illustrated in FIG. 16. In the case where the facility maintenance management system 2 can provide both of the displays illustrated in FIGS. 16 and 17, a user may switch the display between the displays illustrated in FIGS. 16 and 17 according to the visibility of the abnormality on which the user focuses.

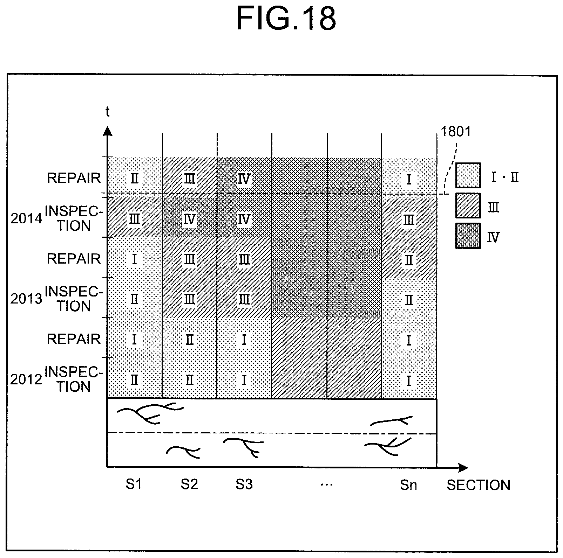

Furthermore, when displaying the aging change of a facility, it is also possible to provide display by using only specific information in the facility maintenance management system 2. FIG. 18 is a diagram illustrating an example in which the facility maintenance management system 2 according to the second embodiment displays changes in soundness for each section of the facility. In FIG. 18, a soundness display area is illustrated on the upper side, and a development diagram display area is illustrated on the lower side. An abnormality development diagram for a specific period is displayed in the development diagram display area on the lower side. For example, the latest abnormality development diagram is displayed in the development diagram display area. In FIG. 18, the facility maintenance management system 2 provides display by using positions in "D tunnel", that is, sections, the dates of inspections on inspection records, the dates of repairs on repair records, and information on soundness, without using specific measurement information on "D tunnel". In the display of FIG. 18, a user cannot check, for example, the specific shape of an abnormality or whether the abnormality has occurred on the side or on the ceiling of "D tunnel" except for the period for which the abnormality development diagram is displayed in the development diagram display area on the lower side. However, the user can grasp changes in soundness of "D tunnel" as a whole. As a result, when the user determines that the soundness of "D tunnel" is low as a whole, it is possible for the user to make a plan for a large-scale repair or the like. It should be noted that the facility maintenance management system 2 may be configured such that a user can change the period of the abnormality development diagram displayed in the development diagram display area on the lower side of FIG. 18 by sliding a bar 1801 up and down in the soundness display area on the upper side of FIG. 18.

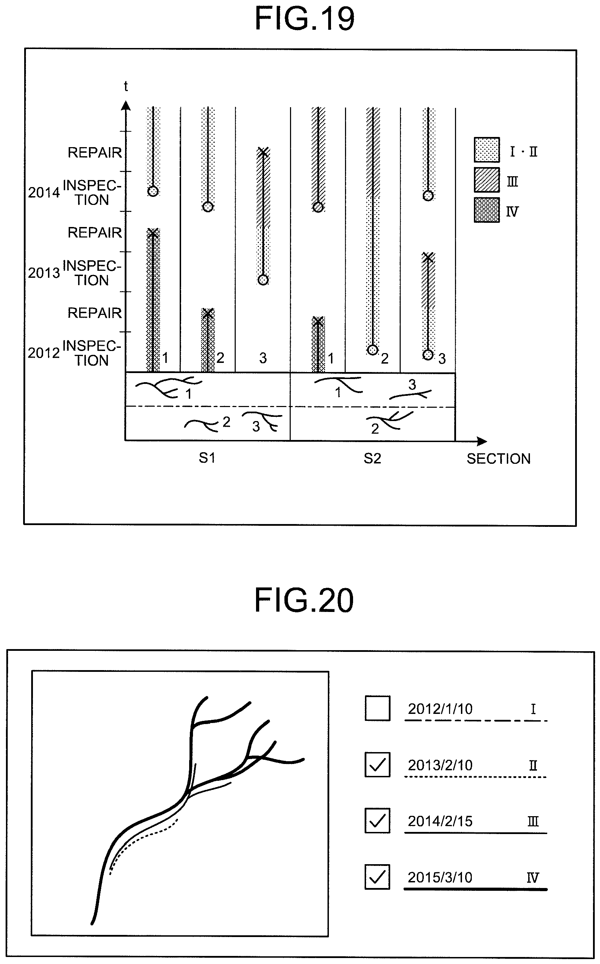

FIG. 19 is a diagram illustrating another example in which the facility maintenance management system 2 according to the second embodiment displays changes in soundness for each section of the facility. As in FIG. 18, the soundness display area is illustrated on the upper side, and the development diagram display area is illustrated on the lower side. In the soundness display area, the mark "○" indicates the time when an abnormality has been newly found, and the mark "X" indicates the time when the abnormality has been resolved as a result of repair. In reality, there are cases where a plurality of abnormalities occurs in the same section. Therefore, the facility maintenance management system 2 shows changes in soundness for each abnormality as illustrated in FIG. 19. The user can grasp the changes in soundness of each abnormality that has occurred in "D tunnel" by checking the diagram illustrated in FIG. 19.

Furthermore, when a specific abnormality is selected by the user in the state of display illustrated in FIG. 16 or 17, the facility maintenance management system 2 may display the aging change of only the selected abnormality. FIG. 20 is a diagram illustrating an example in which the facility maintenance management system 2 according to the second embodiment displays the aging change of a specific abnormality. When a specific abnormality is selected by the user in the state of display illustrated in FIG. 16 or 17, the facility maintenance management system 2 displays changes in the selected abnormality by using another screen for displaying only the selected abnormality. As illustrated in FIG. 20, the facility maintenance management system 2 may be configured such that acquisition times of data on a relevant abnormality are displayed on the right side, and only the abnormality of an acquisition time selected by means of a check box or the like is displayed on the left side. In the facility maintenance management system 2, when the range for superimposed display is selected in any of the facilities in periods, the spatial axis drawing processing unit 27 performs a process of superimposing and displaying part of the facility in some of the periods,the part being corresponding to the range for superimposed display, as illustrated in FIG. 20. As a result, the user can easily check the progress of aging change with regard to the specific abnormality.

It should be noted that the facility maintenance management system 2 can also detect, as a secondary effect, that a facility supposed to be there does not exist any more by displaying the aging change of the facility. For example, this applies to the case where a road sign or a guardrail that had existed until the previous year does not exist any more. In such a case, the facility maintenance management system 2 may display the nonexistence of the facility supposed to be there, on the screen for aging change. Thus, the user can grasp the existence or nonexistence of the facility.

In the process of the second embodiment described above, a mode different from that in the first embodiment is selected at the initial stage of the process. However, the present invention is not limited thereto. The facility maintenance management system 2 may be configured such that the process of the second embodiment can be performed after the process of the first embodiment. When the user further selects the process for aging change while detailed data on some data are displayed in the first embodiment, the facility maintenance management system 2 may display data as illustrated in FIG. 16, including data for acquisition times before and after the acquisition time of the data for which the detailed data are displayed. In such a case, the facility maintenance management system 2 may further provide the display illustrated in FIG. 16 on the display illustrated in FIG. 9.

As described above, according to the present embodiment, the facility maintenance management system 2 displays the states of a selected facility in periods side by side, including maintenance information such as abnormality. As a result, the user can easily check the progress of aging change with regard to the specific abnormality.

### Third Embodiment.

In the first and second embodiments, it is necessary for a user to perform some processes before desired display is provided by the facility maintenance management system 2. There are cases where a user frequently uses display based on the same conditions in the facility maintenance management system 2. Described below in a third embodiment is a case where a facility maintenance management system stores display details displayed according to a user's selection.

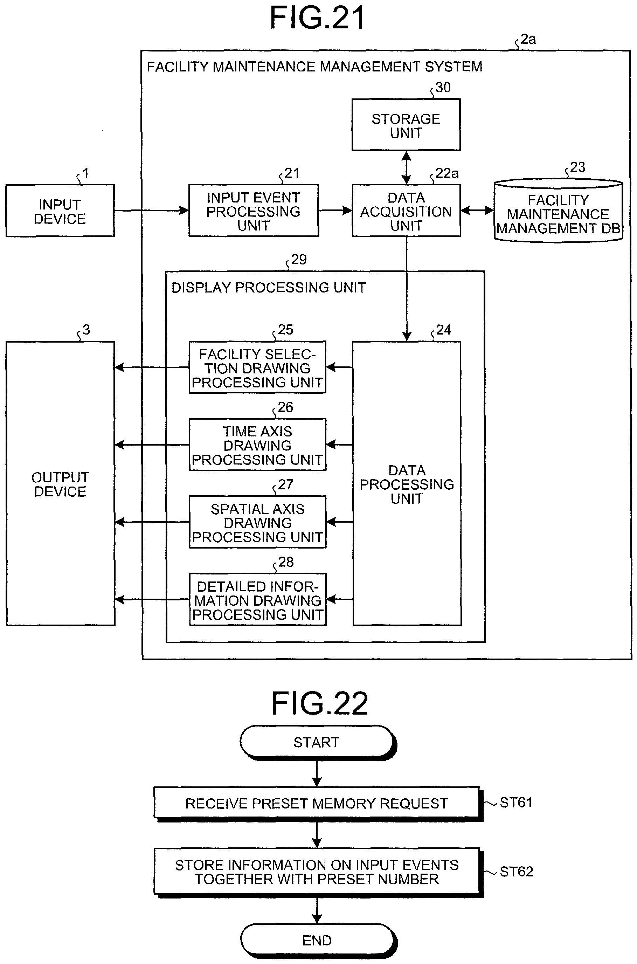

FIG. 21 is a block diagram illustrating a configuration example of a facility maintenance management system 2a according to the third embodiment. In the facility maintenance management system 2a, the data acquisition unit 22 is removed from the facility maintenance management system 2, and a data acquisition unit 22a and a storage unit 30 are added thereto.

In addition to the function of the data acquisition unit 22, the data acquisition unit 22a also causes the storage unit 30 to store details of a user's selection together with a preset number as identification information. The details of the user's selection refer to information on input events notified by the input event processing unit 21 when data are acquired from the facility maintenance management DB 23 for display details currently being displayed on the output device 3.

The storage unit 30 is a memory which the data acquisition unit 22a causes to store the information on the input events, that is, the details of the user's selection together with the preset number.

Next, described below is a process in which the facility maintenance management system 2a stores information on input events regarding display details currently being displayed on the output device 3. FIG. 22 is a flowchart illustrating a process in which the facility maintenance management system 2a according to the third embodiment stores information on input events. It should be noted that the process illustrated in the flowchart of FIG. 22 is based on the premise that the facility maintenance management system 2a provides display such as the display illustrated in FIG. 9 or 18 by performing a process similar to that of the facility maintenance management systems 2 according to the first and second embodiments. In the facility maintenance management system 2a, the input event processing unit 21 receives, from a user, a request to store display details currently being displayed on the output device 3, that is, a preset memory request regarding the display details, via the input device 1 (step ST61). The input event processing unit 21 notifies the data acquisition unit 22a that the input event processing unit 21 has received the preset memory request regarding the display details.

When the user makes the preset memory request regarding the display details currently being displayed on the output device 3, the data acquisition unit 22a causes the storage unit 30 to store, together with a preset number, information on input events notified by the input event processing unit 21 when data are acquired from the facility maintenance management DB 23 for the display details currently being displayed on the output device 3 (step ST62). The preset number may be specified by the user at the stage of step ST61. Alternatively, the data acquisition unit 22a may set the preset number as a serial number, and cause the preset number to be displayed on the output device 3 via the data processing unit 24, the detailed information drawing processing unit 28, and the like.

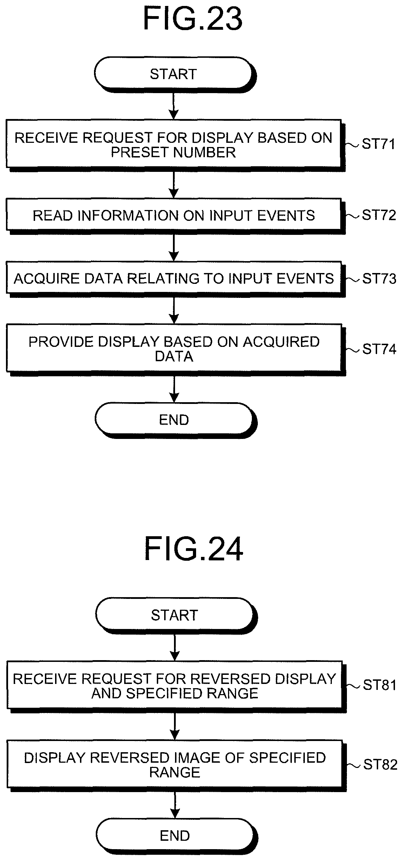

Next, described below is a process in which the facility maintenance management system 2a provides display on the output device 3 based on a preset number received from the user. FIG. 23 is a flowchart illustrating a process in which the facility maintenance management system 2a according to the third embodiment provides display on the output device 3 based on a preset number received from the user. In the facility maintenance management system 2a, the input event processing unit 21 receives, from the user, a request for display based on a preset number, via the input device 1 (step ST71). Specifically, the user inputs the preset number from the input device 1 to the facility maintenance management system 2a. The input event processing unit 21 notifies the data acquisition unit 22a that the input event processing unit 21 has received the request for display based on the preset number.

Upon receiving the notification of the request for display based on the preset number from the input event processing unit 21, the data acquisition unit 22a refers to the storage unit 30 based on the preset number, and reads, from the storage unit 30, information on input events stored together with the corresponding preset number (step ST72). The data acquisition unit 22a acquires data relating to each input event from the facility maintenance management DB 23 based on the input events read from the storage unit 30 (step ST73). The data acquisition unit 22a outputs the acquired data to the data processing unit 24.

The data processing unit 24 outputs each piece of the acquired data to a drawing processing corresponding to each piece of the acquired data, that is, corresponding one of the facility selection drawing processing unit 25, the time axis drawing processing unit 26, the spatial axis drawing processing unit 27, and the detailed information drawing processing unit 28. The facility selection drawing processing unit 25, the time axis drawing processing unit 26, the spatial axis drawing processing unit 27, or the detailed information drawing processing unit 28 provides display on the output device 3 based on the acquired data (step ST74). At this time, the display processing unit 29 displays, on the output device 3, the same display details as display details being displayed on the output device 3 when the user made a request to store the display details. The process performed by the facility maintenance management system 2a as illustrated in FIGS. 22 and 23 is referred to as a fifth display processing step.

It should be noted that in addition to storing display details previously displayed on the output device 3 according to the user's operation, the facility maintenance management system 2a may also store, in the storage unit 30, information on input events regarding display details displayed in the previous use, and provide the same display details as the previous display details at the next startup. In addition, the facility maintenance management system 2a may store, in the storage unit 30, information on input events regarding display details displayed on the output device 3 the previous time for each facility, and display the same display details as the previous display details when the same facility is selected next time.

Regarding the hardware configuration of the facility maintenance management system 2a, the storage unit 30 is implemented by a memory. Other configurations are the same as those of the facility maintenance management system 2.

As described above, according to the present embodiment, the facility maintenance management system 2a stores information on input events regarding display details being displayed on the output device 3 together with a preset number, and provides display on the output device 3 by using the information on the input events stored together with the preset number when the preset number is input by a user. Thus, in obtaining the same display as that provided before, the user can cause the facility maintenance management system 2a to provide desired display with less work than in the first and second embodiments.

### Fourth Embodiment.

Described below in a fourth embodiment is a specific example of display of a facility provided in the image display area 304. This is applicable to all of the first to third embodiments. However, the first embodiment will be cited as an example in description. The configuration of the facility maintenance management system 2 is the same as that of the first embodiment.

In the facility maintenance management system 2, when an abnormality development diagram is displayed in the image display area 304 from a two-dimensionally measured photograph or the like obtained as the measurement information on a facility, there are cases where characters included in the abnormality development diagram are displayed to be horizontally or vertically reversed. In a specified range of the image display area 304, the facility maintenance management system 2 displays a horizontally or vertically reversed image of the specified range. FIG. 24 is a flowchart illustrating a process in which the facility maintenance management system 2 according to the fourth embodiment displays a horizontally or vertically reversed image of a specified range in the image display area 304. In the facility maintenance management system 2, the input event processing unit 21 receives, from a user, a request for reversed display in the image display area 304 and a specified range via the input device 1 (step ST81). The input event processing unit 21 notifies the spatial axis drawing processing unit 27, via the data acquisition unit 22 and the data processing unit 24, that the input event processing unit 21 has received the request for reversed display in the image display area 304 and the specified range.

Upon receiving input events of the request for reversed display in the image display area 304 and the specified range, the spatial axis drawing processing unit 27 displays a reversed image of the specified range on the output device 3. Specifically, the spatial axis drawing processing unit 27 displays a horizontally or vertically reversed image of the specified range on the output device 3 (step ST82). The process performed by the facility maintenance management system 2 as illustrated in FIG. 24 is referred to as a sixth display processing step.

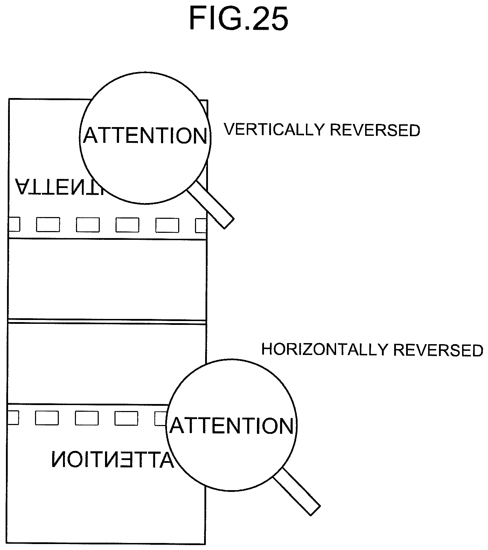

FIG. 25 is a diagram illustrating an example in which the facility maintenance management system 2 according to the fourth embodiment displays a horizontally or vertically reversed image of a specified range in the image display area 304. Generally, in the case of a facility such as a tunnel, a vertically reversed image is displayed in a part above a central line of a two-dimensional development diagram using a photograph or the like, and a horizontally reversed image is displayed in a part below the central line thereof. Thus, it may be difficult to read characters included in the development diagram in some cases. In a range specified by the user, the facility maintenance management system 2 displays a vertically reversed image in the part above the central line, and displays a horizontally reversed image in the part below the central line. The range specified by the user corresponds to a range covered by a lens portion of a magnifying glass in the example of FIG. 25. It does not matter whether the whole or a part of a facility is displayed in the image display area 304. In the case where the whole or a part of a facility is two-dimensionally displayed, the spatial axis drawing processing unit 27 provides vertically or horizontally reversed display in a specified range. As a result, the facility maintenance management system 2 can improve, for the user, visibility on the display screen provided on the output device 3.

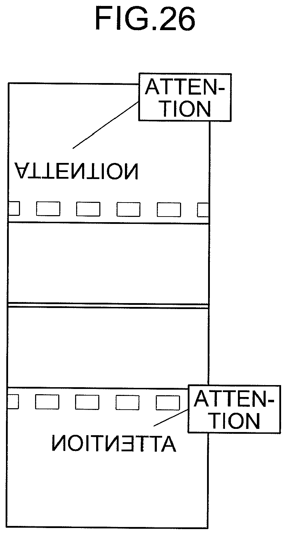

It should be noted that in the process illustrated in FIG. 24, the facility maintenance management system 2 may read characters specified in a selected range, and provide display details defined for the read characters as explanatory characters, instead of horizontally or vertically reversing an image uniformly in the selected range. Examples of the display details defined for the read characters include characters in a normal state, which are not reversed. FIG. 26 is a diagram illustrating an example in which the facility maintenance management system 2 according to the fourth embodiment displays explanatory characters for characters specified in the image display area 304. The flow of processing is the same as in FIG. 24. Even in this case, the facility maintenance management system 2 can improve visibility for the user. The process performed by the facility maintenance management system 2 as illustrated in FIG. 26 is referred to as a seventh display processing step.

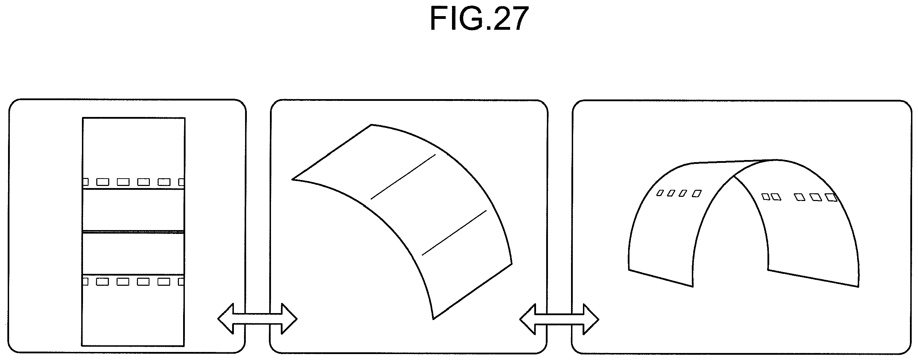

Furthermore, in the case where the whole or a part of a facility is displayed in the image display area 304, the display style of the facility can switch between three-dimensional display and two-dimensional display according to the user's selection, in the facility maintenance management system 2. The spatial axis drawing processing unit 27 provides animation display of a switching process at the time of switching of display in the case where the display of the whole or a part of the facility is switched from two-dimensional display to three-dimensional display or switched from three-dimensional display to two-dimensional display in the above-described case. FIG. 27 is a diagram illustrating an example of changes in display provided when the facility maintenance management system 2 according to the fourth embodiment switches the display style of a facility. In FIG. 27, a flow from the left to the right indicates a transition of display being switched from two-dimensional display to three-dimensional display, and a flow from the right to the left indicates a transition of display being switched from three-dimensional display to two-dimensional display. The process performed by the facility maintenance management system 2 as illustrated in FIG. 27 is referred to as an eighth display processing step. As a result, the user can easily imagine how the facility shown in a two-dimensionally displayed development diagram is actually seen.

As described above, according to the present embodiment, the facility maintenance management system 2 provides display based on various additional processes with regard to an image displayed in the image display area 304. As a result, the facility maintenance management system 2 can improve, for the user, visibility on the display screen provided on the output device 3.

### Fifth Embodiment.

Described below in a fifth embodiment is a display method to be used in the case where a facility maintenance management system is used at an actual facility.

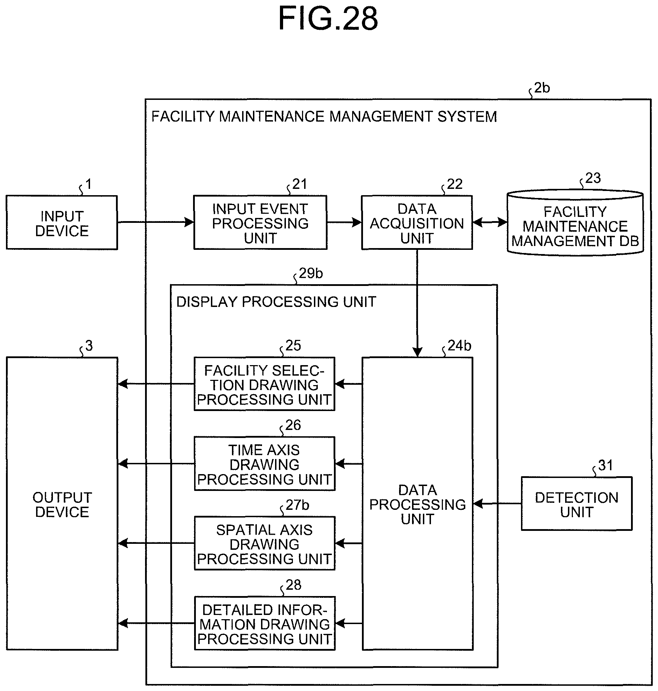

FIG. 28 is a block diagram illustrating a configuration example of a facility maintenance management system 2b according to the fifth embodiment. In the facility maintenance management system 2b, the data processing unit 24 and the spatial axis drawing processing unit 27 are removed from the facility maintenance management system 2, and the input device 1, the output device 3, a data processing unit 24b, a spatial axis drawing processing unit 27b, and a detection unit 31 are added thereto. It should be noted that a display processing unit 29b includes the data processing unit 24b, the facility selection drawing processing unit 25, the time axis drawing processing unit 26, the spatial axis drawing processing unit 27b, and the detailed information drawing processing unit 28. The facility maintenance management system 2b is a tablet terminal that includes the input device 1 and the output device 3.

The detection unit 31 detects the position of the facility maintenance management system 2b, that is, the output device 3. In other words, the detection unit 31 detects the orientation, angle, and the like of the output device 3. Furthermore, the detection unit 31 measures the location of the facility maintenance management system 2b. Examples of a method for measuring the location of the facility maintenance management system 2b include a method using a global positioning system (GPS). However, the method for measuring the location thereof is not limited thereto. In addition, the detection unit 31 may include a gyroscope sensor. The detection unit 31 outputs a result of detecting the position of the output device 3 to the data processing unit 24b. The data processing unit 24b outputs, to the spatial axis drawing processing unit 27b, the result of detecting the position of the output device 3 obtained from the detection unit 31.

The spatial axis drawing processing unit 27b performs display processing for changing the display range of a facility to be displayed on the output device 3 according to the angle of the output device 3, based on the result of detection by the detection unit 31. Specifically, in the case where the whole or a part of the facility is two-dimensionally or three-dimensionally displayed in the image display area 304, the spatial axis drawing processing unit 27b displays, on the output device 3, a view of the facility from below on the basis of the result of detection by the detection unit 31 when the output device 3 is positioned such that the output device 3 looks up the facility. Furthermore, in the case where the whole or a part of the facility is two-dimensionally or three-dimensionally displayed in the image display area 304, the spatial axis drawing processing unit 27b displays, on the output device 3, a view of the facility from above based on the result of detection by the detection unit 31 when the output device 3 is positioned such that the output device 3 looks down the facility.

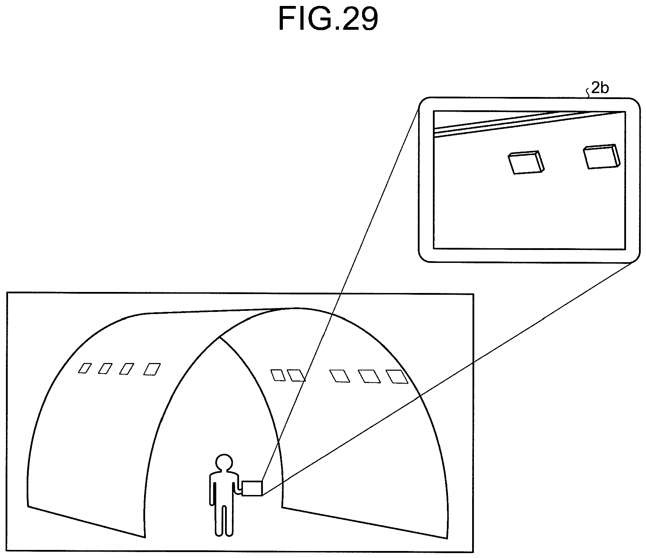

FIG. 29 is a diagram illustrating an example of a positional relationship between the facility maintenance management system 2b according to the fifth embodiment and an actual facility. When a user is looking at the right side of a facility, that is, a tunnel while holding the facility maintenance management system 2b, the facility maintenance management system 2b displays a corresponding part of the right side of the tunnel on the output device 3, as illustrated in FIG. 29. The process performed by the facility maintenance management system 2b as illustrated in FIG. 29 is referred to as a ninth display processing step.

The hardware configuration of the facility maintenance management system 2b is the same as that of the facility maintenance management system 2.

As described above, according to the present embodiment, the facility maintenance management system 2b changes the display range of a facility to be displayed depending on the position of the output device 3, that is, a display unit when a user carries and uses the facility maintenance management system 2b. As a result, the user can easily detect an abnormality in the actual facility by comparing the actual facility with the facility maintenance management system 2b displaying the abnormality and the like.

The configuration illustrated in each of the above embodiments illustrates an example of the subject matter of the present invention, and it is possible to combine the configuration with another technique that is publicly known, and is also possible to make omissions and changes to part of the configuration without departing from the gist of the present invention.

### Reference Signs List

1 input device; 2, 2a, 2b facility maintenance management system; 3 output device; 21 input event processing unit; 22, 22a data acquisition unit; 23 facility maintenance management DB; 24, 24b data processing unit; 25 facility selection drawing processing unit; 26 time axis drawing processing unit; 27, 27b spatial axis drawing processing unit; 28 detailed information drawing processing unit; 29, 29b display processing unit; 30 storage unit; 31 detection unit.

## Claims

1. A facility maintenance management system comprising:
an input event processing unit to receive an input event from a user;
a data acquisition unit to acquire data relating to the input event received by the input event processing unit, from a facility maintenance management database to store data including measurement information that is obtained from measurement of facilities to be maintained and maintenance information on the facilities; and
a display processing unit to perform a process of displaying a distribution of acquisition times of data on a facility selected by the user and a distribution on the facility, based on the data acquired by the data acquisition unit, and perform a process of displaying detailed information on data selected by the user.

2. The facility maintenance management system according to claim 1, wherein
the display processing unit displays the distribution of the acquisition times of the data on the facility selected by the user, displays a distribution of data of an acquisition time on the facility, the acquisition time being selected by the user from the distribution of acquisition times, and displays detailed information on data of a position selected by the user from the distribution of the data of the selected acquisition time on the facility.

3. The facility maintenance management system according to claim 1 or 2, wherein
the input event processing unit receives, from the user, the input events of: a selection of a facility to be displayed; a selection of one or more acquisition times for which data are to be displayed from the distribution of the acquisition times of the data; and a selection of one or more positions of the data for which detailed information is to be displayed from the distribution of the data, on the facility.

4. The facility maintenance management system according to any one of claims 1 to 3, wherein
the display processing unit displays different types of data of a same acquisition time in layers or side by side in chronological order in terms of the acquisition times of the data, in displaying the distribution of the acquisition times of the data.

5. The facility maintenance management system according to any one of claims 1 to 4, wherein
the display processing unit divides the facility into a plurality of sections and displaying different types of data of a same section in layers or side by side for each section in displaying the distribution of the data, on the facility, and two-dimensionally or three-dimensionally displays the facility by using the measurement information for a selected section, and displays relevant data distributed on the selected section of the facility displayed two-dimensionally or three-dimensionally.

6. The facility maintenance management system according to any one of claims 1 to 5, wherein
the display processing unit displays, for relevant data, at least one of character information or image information acquired by the data acquisition unit from the facility maintenance management database in displaying the detailed information on the data.

7. The facility maintenance management system according to any one of claims 1 to 6, wherein
when the process according to any one of claims 1 to 6 is set as a mode for displaying detailed information on desired data,
the input event processing unit receives, from the user, a selection of a mode for displaying an aging change, and a selection of a facility for which the aging change is to be displayed,
the data acquisition unit acquires data relating to the facility for which the aging change is to be displayed from the facility maintenance management database, and
the display processing unit displays the facility for which the aging change is to be displayed such that a plurality of the facilities in units of a prescribed period are shown side by side, and a process of displaying at least some information included in the maintenance information, on the the facilities in periods.

8. The facility maintenance management system according to claim 7, wherein
when a range for superimposed display is selected in any of the facilities in the periods, the display processing unit performs a process of superimposing and displaying part of the facility in some of the periods, the part being corresponding to the range for superimposed display.

9. The facility maintenance management system according to any one of claims 1 to 8, further comprising
a storage unit to store, together with identification information, details of the user's selection regarding display details being displayed as a result of the process performed by the display processing unit,
wherein the input event processing unit receives the identification information from the user,
the data acquisition unit refers to the storage unit, and acquires data relating to the details of the user's selection from the facility maintenance management database, based on the identification information, and
the display processing unit displays same display details as the display details by using the data acquired by the data acquisition unit.

10. The facility maintenance management system according to any one of claims 1 to 9, wherein
when whole or a part of the facility is two-dimensionally displayed, the display processing unit provides vertically or horizontally reversed display in a specified range.

11. The facility maintenance management system according to any one of claims 1 to 9, wherein
when whole or a part of the facility is two-dimensionally or three-dimensionally displayed, the display processing unit displays prescribed display details for a specified character among displayed characters.

12. The facility maintenance management system according to any one of claims 1 to 11, wherein
the display processing unit provides animation display of a switching process at time of switching of display in a case where display of whole or a part of the facility is switched from two-dimensional display to three-dimensional display or switched from three-dimensional display to two-dimensional display.

13. The facility maintenance management system according to any one of claims 1 to 12, further comprising:
a display unit to provide display according to display processing performed by the display processing unit; and a detection unit to detect a position of the display unit,
wherein the display processing unit changes a display range of a facility to be displayed on the display unit according to an angle of the display unit, based on a result of detection by the detection unit.

14. The facility maintenance management system according to claim 13, wherein
in a case where the facility is two-dimensionally or three-dimensionally displayed, the display processing unit displays, on the display unit, a view of the facility from below when the display unit is positioned such that the display unit looks up, and displays, on the display unit, a view of the facility from above when the display unit is positioned such that the display unit looks down, based on the result of detection by the detection unit.

15. A facility information providing method to be used in a facility maintenance management system, the method comprising:
a first display processing step of receiving a selection of a facility to be displayed from a user, acquiring related data from a facility maintenance management database to store data including measurement information that is obtained from measurement of facilities to be maintained and maintenance information on the facilities, and displaying a distribution of acquisition times of data on the selected facility;
a second display processing step of receiving, from the user, a selection of one or more acquisition times for which data are to be displayed from the distribution of the acquisition times of the data, acquiring related data from the facility maintenance management database, and displaying a distribution of data of the selected one or more acquisition times on the facility; and
a third display processing step of receiving, from the user, a selection of one or more positions of the data for which detailed information is to be displayed from the distribution of the data of the selected one or more acquisition times on the facility, acquiring related data from the facility maintenance management database, and displaying detailed information on data of the selected one or more positions.

16. The facility information providing method according to claim 15, wherein
the first display processing step includes displaying different types of data of a same acquisition time in layers or side by side in chronological order in terms of the acquisition times of the data.

17. The facility information providing method according to claim 15 or 16, wherein
the second display processing step includes: dividing the facility into a plurality of sections and displaying different types of data of a same section in layers or side by side for each section; and two-dimensionally or three-dimensionally displaying the facility by using the measurement information for a selected section, and displaying relevant data distributed on the selected section of the facility displayed two-dimensionally or three-dimensionally.

18. The facility information providing method according to any one of claims 15 to 17, wherein
the third display processing step includes displaying, for relevant data, at least one of character information or image information acquired from the facility maintenance management database.

19. The facility information providing method according to any one of claims 15 to 18, further comprising
a fourth display processing step of receiving, from the user, a selection of a mode for displaying an aging change and a selection of a facility for which the aging change is to be displayed, acquiring data relating to the facility for which the aging change is to be displayed from the facility maintenance management database, displaying, the facility for which the aging change is to be displayed such that a plurality of the facilities in units of a prescribed period are shown side by side, and displaying at least some information included in the maintenance information, on the facilities in periods,
when the process according to any one of claims 15 to 18 is set as a mode for displaying detailed information on desired data.

20. The facility information providing method according to claim 19, wherein
the fourth display processing step includes superimposing and displaying part of the facilities in the periods, the part being corresponding to a range for superimposed display when the range for superimposed display is selected in any of the facilities in the periods.

21. The facility information providing method according to any one of claims 15 to 20, further comprising
a fifth display processing step of: receiving identification information from the user; referring to a storage unit to store, together with the identification information, details of the user's selection regarding display details being displayed; acquiring data relating to the details of the user's selection from the facility maintenance management database, based on the identification information; and displaying same display details as the display details.

22. The facility information providing method according to any one of claims 15 to 21, further comprising
a sixth display processing step of providing vertically or horizontally reversed display in a specified range when whole or a part of the facility is two-dimensionally displayed.

23. The facility information providing method according to any one of claims 15 to 21, further comprising
a seventh display processing step of displaying prescribed display details for a specified character among displayed characters when whole or a part of the facility is two-dimensionally or three-dimensionally displayed.

24. The facility information providing method according to any one of claims 15 to 23, further comprising
an eighth display processing step of providing animation display of a switching process at time of switching of display in a case where display of whole or a part of the facility is switched from two-dimensional display to three-dimensional display or switched from three-dimensional display to two-dimensional display.

25. The facility information providing method according to any one of claims 15 to 24, wherein
the facility maintenance management system includes a display unit, and
the facility information providing method further comprises
a ninth display processing step of changing a display range of a facility to be displayed on the display unit to provide display, according to an angle of the display unit based on a result of detection of a position of the display unit.

26. The facility information providing method according to claim 25, wherein
the ninth display processing step includes displaying, on the display unit, a view of the facility from below when the display unit is positioned such that the display unit looks up, and displaying, on the display unit, a view of the facility from above when the display unit is positioned such that the display unit looks down, based on the result of detection in a case where the facility is two-dimensionally or three-dimensionally displayed.
